# EUROPEAN PATENT SPECIFICATION

(11) **EP 0 606 534 B1**
(45) Date of publication and mention of the grant of the patent: **29.12.1997**
(21) Application number: 93115845.5
(22) Date of filing: 30.09.1993
(51) Int. Cl.: B01L 3/14, B01L 3/00

(54) **Cover for array of reaction tubes**
Schutzdeckel für Teströhrchen matrix
Couvercle de protection pour une grille de tubes de réaction

(30) Priority: 11.01.1993 US 2559
(43) Date of publication of application: 20.07.1994
(73) Proprietor: THE PERKIN-ELMER CORPORATION, Norwalk Connecticut 06859-0074 (US)
(72) Inventor: Picozza, Enrico, Newtown, CT 06470 (US); Woudenberg, Timothy, Bethel, CT 06801 (US); Ragusa, Bob, Newtown, CT 06470 (US); Keese, Ralph, Trumbull, CT 06611 (US)
(74) Representative: Grünecker, Kinkeldey, Stockmair & Schwanhäusser Anwaltssozietät

(56) References cited:
- EP-A- 0 285 496
- EP-A- 0 339 769
- EP-A- 0 388 159
- EP-A- 0 488 769
- DE-A- 2 507 835
- GB-A- 1 113 010

## Description

This invention relates to a planar array of reaction tube covers adapted to seal a plurality of reaction tubes arranged in a predetermined spacial arrangement, said array comprising: a plurality of covers held in a predetermined spaced relationship from each other by a web. This invention also relates to chemical reaction tube covers, and more particularly to a cover for a two-dimensional array of reaction tubes preferably utilised in an instrument for performing polymerase chain reactions (PCR).

### Description of the Related Art

Automated thermal cyclers for performing PCR simultaneously on a number of samples are disclosed in the patent applications mentioned above and in U.S. Patent No. 5,038,852. Briefly, PCR is an enzymatic process by which a small amount of specific DNA sequences can be greatly amplified in a relatively short period of time. The method utilizes two oligonucleotide primers that hybridize to opposite strands and flank the region of interest in the target DNA. A repetitive series of thermal cycles involving template denaturation, primer annealing, and the extension of the annealed primers by DNA polymerase results in the exponential accumulation of a specific DNA fragment whose termini are defined by the 5' ends of the primers.

A reaction mixture made up of the target DNA to be amplified, oligonucleotide primers, buffers, nucleotide triphosphates, and preferably a thermostable enzyme such as Taq polymerase, are combined and placed in reaction tubes. The reaction mixture contained in the tubes is then subjected to a number of thermal transition and soak periods known as PCR protocols in a thermal cycler to generate the amplified target DNA.

An array of reaction tubes is typically made up of up to either 48 or 96 tubes arranged in a 6 x 8 array or an 8 x 12 array in a tray. The array of tubes is placed in a metal thermal cycler block so that the lower portion of each tube is in intimate thermal contact with the block. The temperature of the block is then varied in accordance with the predetermined temperature/time profile of the PCR protocol for a predetermined number of cycles.

The denaturation step of the PCR protocol involves heating and maintaining the reaction mixture to around 95°C to separate double stranded DNA into single strands. At this elevated temperature, evaporation becomes a problem. To prevent evaporation of the tube contents during the PCR process, either a layer of wax or oil is placed on top of the mixture in each tube or a cap is placed on each tube in conjunction with a heated cover.

The caps are preferred over the oil or wax layer because application of such a layer is time consuming, messy, and invites mixture contamination. These caps may be separate individual caps or may be attached integrally to the tube. Alternatively, a series of plastic caps are connected together in linear strips of 8 or 12. Each one of the caps includes a tubular lower portion and an upwardly domed upper portion. The caps are connected together by an integral tab so as to form the strip of caps.

A tray of reaction tubes is typically filled with appropriate sample fluids, and each individual cap in a single strip is inserted into a tube so that the domed portion is up and the tubular portion fits down inside the reaction tube to provide a seal. The caps may be removed by pulling up on one end of the individual cap strip, as the reaction tubes are held within the tray by a retainer. Installation of these conventional caps on the reaction tubes is a relatively tedious and time consuming process requiring specific insertion of the tubular portion of each cap in each individual tube.

The tray of capped reaction tubes is inserted into a thermal cycler block and a heated platen cover is lowered over the block, pressing the domed caps downward to uniformly seat all of the reaction tubes and establish good thermal contact between each tube and the thermal cycler block. The heated platen cover provides a closed environment over the upper portions of the tubes projecting above the thermal cycler block. This heated platen cover is maintained during the thermal cycling protocol at a temperature greater than any of the thermal cycling temperatures so as to preclude vapor condensation within the upper portion of the tube or beneath the cap, both of which protrude above the body of the thermal cycler block. Thus, evaporative losses are prevented by the caps and internal vapor condensation is prevented by the elevated temperature under the platen cover.

The heated platen cover also prevents refluxing which affects the temperature of the sample within the reaction tube. Refluxing is the cyclical evaporation and condensation within the enclosed space above the sample within the reaction tube. Refluxing will generally lower the sample temperature during the thermal cycling protocol.

After the thermal cycling protocol has been completed, the tray of capped reaction tubes is removed from the thermal cycler and may be allowed to return to room temperature. The strips of caps are then removed from the tubes carefully so as to preclude cross-contamination between the tubes, and the array is transferred to other instruments for PCR product detection or further processing.

The configuration of plastic caps consisting of a strip of individual domed caps is quite adequate for small scale PCR where high throughputs are not required. The design offers the advantage of isolating each individual reaction tube but can be tedious to position in place and to remove. Accordingly, there is a need for a full plate cover or blanket which would offer the user an easier and faster way of sealing an entire array of tubes and easier, more efficient access to the tubes at the end of the PCR process.

From EP-A3-0 488 769 a mat of 96 flexible plastic caps with a compliant web connecting them in an 8 × 12 array has become known. With the said caps in the said known mat it may be difficult that all caps in the said mat sufficiently close each sample tube in the corresponding array of sample tubes and keep them closed during the whole reaction process.

### SUMMARY OF THE INVENTION

According to the invention, a planar array of reaction tube covers adapted to seal a plurality of reaction tubes arranged in a predetermined spacial arrangement is provided said array comprising a plurality of flexible plastic covers held in a predetermined spaced relationship from each other by a web and which is characterised in that each of said covers is formed by a nodule adapted to fit into and seal an open end of one of said reaction tubes, each of said nodules having a downwardly convex lower portion for fitting within said one end and an upwardly convex upper portion over said lower portion.

Each of the nodules is adapted to fit into and provide two seals on the mouth of a reaction tube. Each of the nodules has a downwardly convex lower portion and an upwardly convex upper portion directly over the lower portion. The web connecting each of the nodules has a plurality of apertures through the web spaced between the nodules to allow for thermal circulation below and above the cover.

Where the spaced relationship is a planar array utilized to cover a two-dimensional rectangular array of reaction tubes held in a rectangular tray, the nodules are aligned in spaced linear rows and columns, with the apertures preferably diagonally between the nodules. The apertures between the nodules permit air to circulate between the heated platen and the upper sides of the reaction tubes extending above the thermal cycler block.

Each nodule has outwardly convex upper and lower portions extending from the plane of a central sheet or web. The lower portion of each of the nodules is preferably of a hemispherical shape which has a diameter equal to or slightly greater than the inside diameter of the mouth of the reaction tube. This hemispherical shape permits each of the nodules to fit into and concentrically seal one of the tubes in two ways. First, the hemispherical portion fits down into the tube so that there is an annular seal around the inside surface of the tube adjacent the mouth. Second, the portion of the web around the outer perimeter or base of the hemispherical lower portion provides an annular planar seal against the top surface of the mouth of the tube.

The upper portion of the nodule is outwardly convex and preferably has a central nipple extending upward from the upwardly convex portion. This nipple may be in the form of a cylindrical post, or, more preferably, a smooth, curved, dome-shaped protrusion extending vertically above the convex upper portion.

Tests utilizing covers in accordance with the present invention in a Perkin-Elmer GeneAmp™ PCR System thermal cycler produce the same PCR results as tubes with the conventional individual cap strips discussed above without evidencing sample degradation. The covers of the invention maintain an effective seal on the tubes to prevent any liquid or vapor leakage. The nipple on the upper portion of the nodules does not stick to the heated platen cover and provides efficient downward force transfer to ensure that all of the reaction tubes are firmly seated within the thermal cycler block.

These, and other advantages and features of the invention will become more apparent from a detailed reading of the following description when taken in conjunction with the appended claims.

### BRIEF DESCRIPTION OF THE DRAWINGS

Figure 1 is a top view of a cover in accordance with an embodiment of the present invention.
Figure 2 is an enlarged side view of a portion of the embodiment of the present invention shown in Figure 1.
Figure 3 is a partial sectional view of a thermal cycler assembly and reaction tube tray using the cover in accordance with the embodiment of the present invention.

### DETAILED DESCRIPTION OF THE INVENTION

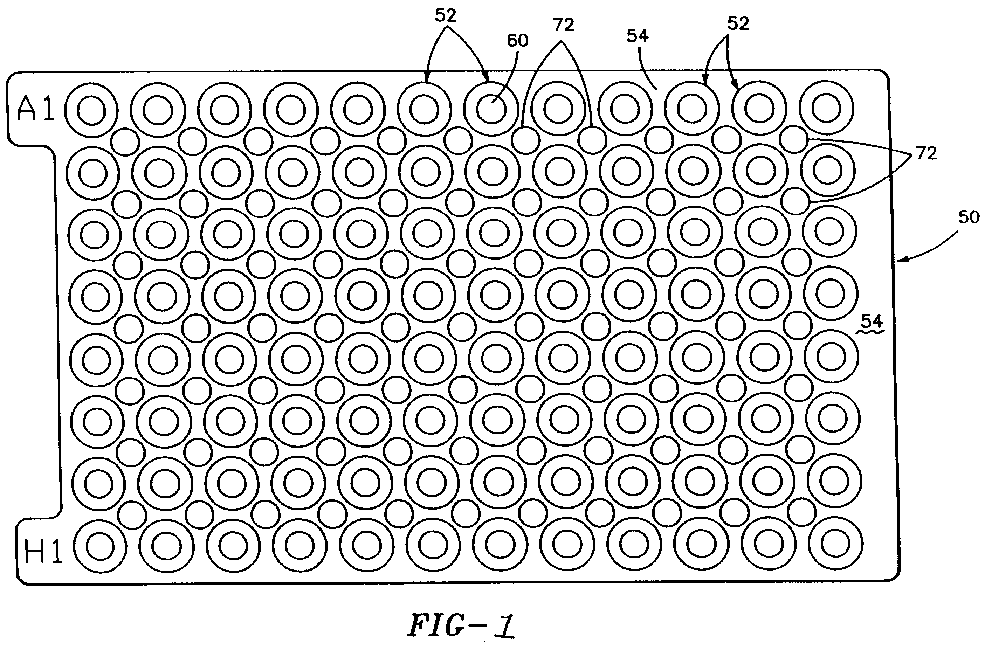

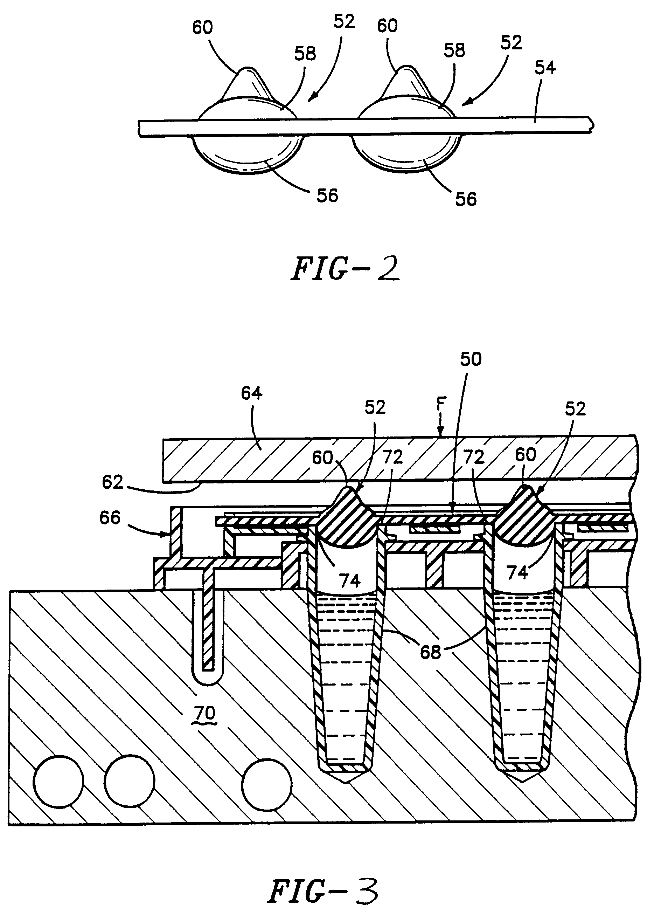

An embodiment of the cover in accordance with the present invention is shown in a top view in Figure 1, and a partial side view in Figure 2. Cover 50 is a planar array of individual reaction tube covers or nodules 52 arranged in a predetermined rectangular spatial arrangement corresponding to the centers of a corresponding planar array of reaction tubes held in a tray. Each of the individual covers or nodules 52 is made of a flexible plastic material and held in the predetermined spaced relationship from each other by an integral web 54. Web 54 may be integral with nodules 52 and made of the same material or may be made of a different material with the nodules 52 molded or adhesively attached to the web 54 at appropriate locations.

As best shown in Figure 2, each of the nodules 52 has a downwardly convex, e.g. dome-shaped, lower portion 56. Nodule 52 has an upwardly convex upper portion 58 over the lower portion 56. Extending upward from the upper portion 58 is an integral nipple 60. The nipple 60 may be a generally rounded conical protrusion as illustrated in Figure 2, or may be a cylindrical post with a rounded tip. The purpose of the rounded tip on the nipple 60 is to preclude the nipple from adhering to the under surface 62 of the heated platen 64 illustrated in Figure 3 when the heated platen 64 is lowered with force F onto the cover 50.

Figure 3 illustrates a partial sectional view through a thermal cycler containing a tray 66 of reaction tubes 68 extending into a thermal cycler block 70. As a heated platen 64 is lowered onto tray 66, nipples 60 are pressed downwardly to seat into and seal each of the tubes 68, and in turn press the tubes 68 into firm contact in thermal cycler block 70.

The rounded upper tip of the nipples 60 is preferred to preclude a suction occurring against the underside 62 of the heated platen 64 as it is removed from engagement with the tray 66 following completion of the PCR protocol. This prevents the cover 52 from being inadvertently lifted with the platen 64.

The heated platen 64 is designed to heat the air around the portion of the reaction tubes 68 that extends above block 70 to prevent vapor condensation in the upper portion of the tubes 68. Apertures 72 are provided between the rows and columns of nodules 52 as the silicone rubber cover, in accordance with the present invention, is a thermal insulator. These apertures permit radiative heat transfer and convective circulation of the air beneath the heated platen 64 and above the upper surface of the block 70. Thus, as the heated platen 64 rests against the upper edge of the tray 66, a captive air space in between is created which is quickly heated and maintained at a temperature greater than the block 70 temperature.

The embodiment of the cover in accordance with the present invention provides two separate seals on each reaction tube. The first is between the upper surface 72 of the mouth of the tube 68 and the portion of the web 54 around the base of the nodule 52. The second is between an annular portion of the hemispherical lower portion 56 and against the inside surface 74 around the mouth of the reaction tube 68. In another embodiment, this second seal may be provided by a cylindrical extension of the convex lower portion so as to provide a larger contact surface for the seal.

When the force F is removed from the heated platen 64 and the platen raised so that the tray 66 can be removed, the cover 50 remains in place on the array of tubes 68. The entire array of tubes 68 may be uncapped simply by lifting the cover 50 in one motion. Thus, installing and removing the covers is a simple step requiring minimum time while ensuring adequate sealing, minimizing operating time and thus providing a cost savings per analysis.

The cover portion 12 or nodules 52 are spaced on 9 millimeter centers corresponding to the standard array of 96 reaction tubes. The apertures are about 4 millimeters in diameter. It is to be understood that other spacings and sizes may be utilized depending on the reaction tube tray design. The preferred silicon rubber must be chemically resistant to dilute nitric acid, dilute sodium hydroxide, sodium hypochlorite (bleach), and ethanol having material hardness of Shore A 50, and must be autoclavable. Silicone rubber is preferable in this application as it is inert to the PCR products and reagents, is autoclavable, and is washable in a hypochlorite solution without substantial deleterious effects. A suitable silicone rubber material may be obtained by High Tech Rubber Company, Anaheim, CA.

Other materials may also be utilized provided they are flexible, inert to reactions with the reagents utilized, and can withstand repeated thermal cycling to temperatures above 100°C. Also, the nodules may each have an internal filling of a high thermal conductivity material such as a metal "B-B" to increase the overall heat transfer through the nodules from the heated platen. The cover 50 in accordance with the present invention need not be utilized with a full tray of reaction tubes. For example, an array of 8 rows by 12 columns, totalling 96 tubes, may effectively be utilized with the cover in accordance with the present invention. However, the same sample tray containing any number of tubes will be adequately sealed with the covers in accordance with the present invention. Thus, the covers in accordance with the present invention can effectively replace the conventional cap strips and result in substantial time savings during handling.

The embodiment of the cover provide a good hermetic seal on each of the tubes and prevents any leakage, operate so that the tubes may still remain oil free, are easy to remove from the plate and do not stick to the heated platen. While the invention has been described above with reference to a specific embodiment thereof, it is apparent that many changes, modifications, and variations can be made without departing from the inventive concept disclosed herein. For example, the illustrated embodiment of the cover 50 is a rectangular array. The array may be a circular, other polygonal, or an annular arrangement, depending on the tray configuration. In addition, the apertures may be placed between linearly adjacent nodules or diagonally between them as shown in Figure 3. In addition, the holes need not be circular. They may also be slots or other designs so long as the cover portions are connected together.

## Claims

1. A planar array of reaction tube covers (52) adapted to seal a plurality of reaction tubes (68) arranged in a predetermined spacial arrangement, said array comprising:
a plurality of flexible plastic covers (52) held in a predetermined spaced relationship from each other by a web, (54)
**characterized in that**
each of said covers is formed by a nodule (52) adapted to fit into and seal an open end of one of said reaction tubes (68), each of said nodules (52) having a downwardly convex lower portion (56) for fitting within said one end and an upwardly convex upper portion (58) over said lower portion.

2. The array according to claim 1 wherein said portions (56; 58) are integrally connected to said web (54).

3. The array according to claim 1 wherein said web (54) has a plurality of apertures (72) therethrough spaced between said nodules (52).

4. The array according to claim 1 wherein said array is a molded unitary rubber body.

5. The array according to claim 4 wherein said body is silicone rubber.

6. The array according to claim 1 wherein said lower portion (56) has a generally hemispherical shape.

7. The array according to claim 1 wherein each of said nodules has a nipple (60) extending upward from said upwardly convex portion (58).

8. The array according to claim 7 wherein said nipple (60) is centered above said upper and lower portions (56; 58) and has a dome shape.

9. The array according to claim 7 wherein said lower portion (56) has a generally hemispherical shape.

10. The array according to claim 1 wherein each of said nodules (52) being flexibly held in a predetermined planar spaced relationship from each other in rows and columns by said web (54).

## Patentansprüche

1. Ein planares Feld aus Reaktionsgefäßabdeckungen (52), die so angepaßt sind, daß sie eine Mehrzahl von Reaktionsgefäßen (68), die in einer vorbestimmten räumlichen Anordnung angeordnet sind, schließen, wobei das Feld aufweist:
eine Mehrzahl von flexiblen Plastikabdeckungen (52), die durch ein Band (54) in einer vorbestimmten räumlichen Beziehung zueinander gehalten sind,
**dadurch gekennzeichnet, daß**
jede Abdeckung durch eine Nodule (52) gebildet ist, die so angepaßt ist, daß sie in ein offenes Ende eines der Reaktionsgefäße (68) paßt und dieses schließt, wobei jede Nodule (52) einen nach unten konvexen unteren Abschnitt (56), der in das eine Ende paßt, und über dem unteren Abschnitt einen nach oben konvexen oberen Abschnitt (58) aufweist.

2. Das Feld nach Anspruch 1, in welchem die Abschnitte (56; 58) integral mit dem Band (54) verbunden sind.

3. Das Feld nach Anspruch 1, in welchem das Band (54) eine Mehrzahl von Durchgangsöffnungen (72) aufweist, die zwischen den Nodulen (52) beabstandet angeordnet sind.

4. Das Feld nach Anspruch 1, in welchem das Feld ein geformter einheitlicher Gummikörper ist.

5. Das Feld nach Anspruch 4, in welchem der Körper aus Silicongummi ist.

6. Das Feld nach Anspruch 1, in welchem der untere Abschnitt (56) eine im allgemeinen hemisphärische Form hat.

7. Das Feld nach Anspruch 1, in welchem jede Nodule einen Fortsatz (60) aufweist, der sich von dem nach unten konvexen Abschnitt (58) nach unten erstreckt.

8. Das Feld nach Anspruch 7, in welchem der Fortsatz (60) über dem unteren und dem oberen Abschnitt (56; 58) zentriert ist und eine gewölbte Form aufweist.

9. Das Feld nach Anspruch 7, in welchem der untere Abschnitt (56) eine im allgemeinen hemisphärische Form hat.

10. Das Feld nach Anspruch 1, in welchem jede Nodule (52) durch das Band (54) flexibel in einer vorbestimmten planaren räumlichen Beziehung zueinander in Reihen und Spalten gehalten ist.

## Revendications

1. Groupement plan de couvercles (52) de tubes de réaction conçu pour sceller une pluralité de tubes de réaction (68) agencés dans une position spatiale prédéterminée, ledit groupement comprenant :
une pluralité de couvercles de plastique souple (52) maintenus dans une relation d'écartement prédéterminé, les uns par rapport aux autres, par une bande (54)
**caractérisé en ce que**
chacun desdits couvercles est formé par un nodule (52) conçu pour s'ajuster et sceller une extrémité ouverte d'un desdits tubes de réaction (68), chacun desdits nodules (52) ayant une partie inférieure convexe vers le bas (56) pour s'ajuster à l'intérieur de ladite extrémité particulière et une partie supérieure convexe vers le haut (58) au-dessus de ladite partie inférieure.

2. Groupement selon la revendication 1, dans lequel lesdites parties (56 ; 58) sont reliées en une pièce à ladite bande (54).

3. Groupement selon la revendication 1, dans lequel ladite bande (54) possède une pluralité d'ouvertures (72) à travers cette dernière, espacées entre lesdits nodules (52).

4. Groupement selon la revendication 1, dans lequel ledit groupement est un corps de caoutchouc unitaire moulé.

5. Groupement selon la revendication 4, dans lequel ledit corps est en caoutchouc au silicone.

6. Groupement selon la revendication 1, dans lequel ladite partie inférieure (56) a une forme globalement hémisphérique.

7. Groupement selon la revendication 1, dans lequel chacun desdits nodules possède un manchon (60) s'étendant vers le haut à partir de ladite partie convexe vers le haut (58).

8. Groupement selon la revendication 7, dans lequel ledit manchon (60) est centré au-dessus desdites parties supérieure et inférieure (56 ; 58) et a une forme de dôme.

9. Groupement selon la revendication 7, dans lequel ladite partie inférieure (56) a une forme globalement hémisphérique.

10. Groupement selon la revendication 1, dans lequel chacun desdits nodules (52) est maintenu, de manière souple, dans une relation d'écartement plan prédéterminé, les uns par rapport aux autres, en rangées et en colonnes, par ladite bande (54).
